**Europäisches Patentamt**

**European Patent Office**

**Office européen des brevets**

(19)

(11) Veröffentlichungsnummer: **0 005 479**
**A2**

(12) **EUROPÄISCHE PATENTANMELDUNG**

(21) Anmeldenummer: **79101340.2**

(22) Anmeldetag: **03.05.79**

(51) Int. Cl.²: **F 16 B 19/00**
**F 16 B 5/06**

(30) Priorität: **19.05.78 DE 2821877**

(43) Veröffentlichungstag der Anmeldung:
**28.11.79 Patentblatt 79/24**

(84) Benannte Vertragsstaaten:
**BE CH FR GB IT NL SE**

(71) Anmelder: **Paul Hellerman GmbH**
**Siemensstrasse 5**
**D-2080 Pinneberg(DE)**

(72) Erfinder: **Kabel, Heinrich**
**Herderstrasse 30**
**D-2085 Quickborn(DE)**

(74) Vertreter: **Glawe, Richard, Dr. et al,**
**Rothenbaumchaussee 58**
**D-2000 Hamburg 13(DE)**

(54) **Befestigungselement.**

(57) Ein Befestigungselement hat zur Verankerung in einem plattenförmigen Bauelement einen sich konisch hinter dem plattenförmigen Bauelement erweiternden Schaft. Damit auch bei Verwendung im Zusammenhang mit dünnen Platten, die nur mit dem dünneren Teil des Schafts zusammenwirken könnten, eine ausreichende und stets gleichbleibende Befestigungskraft erreicht wird, ist ein hinter dem plattenförmigen Bauelement anzuordnender Ring vorgesehen, dessen Innendurchmesser dem Wurzelduchmesser des Schaftes entspricht.

Fig. 2

EP 0 005 479 A2

Beschreibung

---

Die Erfindung bezieht sich auf ein Befestigungselement, das
von der Vorderseite eines plattenförmigen Bauelements her
in einer Bohrung desselben mittels eines längsgeteilten
Schafts verankerbar ist, der aus einem zuerst in die Bohrung
einzuschiebenden, sich hinter der Bohrung erweiternden Teil
und einem danach einzuschiebenden, prismatischen Teil zusammengesetzt ist, wobei jeder der beiden Teile an der Bildung des mit der Bohrung zusammenwirkenden Schaftumfangs beteiligt ist, und wobei der sich hinter der Bohrung erweiternde Schaftteil sich zu der Seite des prismatischen Schaftteils
hin, diesen zumindest hinter der Bohrung von der Bohrungsachse weg nach außen biegend, erweitert. Dadurch wird bewirkt,
daß nicht nur der sich erweiternde Schaftteil gegen die auf
seiner Seite liegende Bohrungskante, sich dort festkrallend,
gepreßt wird, sondern auch der prismatische Teil zu dessen
Bohrungskante hin gebogen wird, so daß er sich dort festhält.
Ein solches Befestigungselement hat daher die vorteilhafte
Eigenschaft, daß der gesamte Schaft an der Kraftübertragung
beteiligt ist und innerhalb eines beträchtlichen Toleranzbereichs des Bohrungsdurchmessers ohne Lose festsitzt.

Der Schaft des Befestigungselementes sitzt in der Bohrung umso fester, je dicker das plattenförmige Bauelement ist, weil
dann umso dickere Teile des Schafts mit der Bohrung zusammenwirken. Bei dicken plattenförmigen Bauelementen wirken
sich daher auch Toleranzen im Bohrungsdurchmesser nicht kritisch aus. Bei sehr dünnen plattenförmigen Bauelementen, die
nur mit dem Wurzelteil des Schaftes zusammenwirken, wo dieser noch verhältnismäßig dünn ist, müssen für eine sichere
Befestigung engere Toleranzen eingehalten werden. Jedoch
ist bei dünnen plattenförmigen Bauelementen (Blechen) die
Einhaltung von engen Toleranzen mit Bohrwerkzeugen schwierig.

Die Erfindung will das eingangs genannte Befestigungselement deshalb dahingehend verbesserrn, daß auch bei sehr
dünnen plattenförmigen Bauelementen große Haltesicherheit
unabhängig von den Bohrungstoleranzen erreicht wird.

Die erfindungsgemäße Lösung besteht darin, daß zur Anbringung des Befestigungselementes an einem sehr dünnen, plattenförmigen Bauelement ein hinter der Bohrung anzuordnender
Ring vorgesehen ist, dessen Innendurchmesser dem Wurzeldurchmesser des Schafts entspricht.

Innendurchmesser und Dicke des Rings sind so bemessen, daß
der Schaft sich darin sicher verankert. Der Ring kann auch
als Massenprodukt mit sehr engen Toleranzen des Innendurchmessers hergestellt werden, so daß absolut gleichbleibende
Haltesicherheit erreicht werden kann. Vorteilhafterweise
wird er aus einem harten und zähen Werkstoff wie Nylon gefertigt, so daß er bei geringem Untermaß seines Innendurchmessers gegenüber dem damit zusammenwirkenden Teil des Schafts
sich dehnend nachgeben kann. Unter der dabei erzeugten Ringspannung liegt er fest am Schaft an, wobei vornehmlich an
dem von dem plattenförmigen Bauelement abgewandten Ende der
Ringbohrung Spannungsspitzen auftreten, die eine gewisse
plastische oder elastische Verformung des Schafts und/oder
des Rings verursachen, die die gegenseitige formschlüssige
Verankerung begünstigen. Um diesen Effekt zu steigern, soll
die dem plattenförmigen Element abgewandte Ausgangskante der
Ringbohrung mehr oder weniger scharfkantig ausgebildet sein.
Der Schaft sitzt so stramm in der Ringbohrung, daß die Verbindung auch gegen axiale Verschiebungen gesichert ist und
somit die Forderung nach absoluter Rüttelfestigkeit erfüllt
wird.

Bei der Erfindung spielt der Umstand eine Rolle, daß sehr
dünne plattenförmige Bauelemente im allgemeinen nur eine
sehr begrenz-te flächige Ausdehnung haben, so daß eine
ausschließlich einseitige Montage des Befestigungselements
nicht erforderlich ist. Man kann daher Werkzeuge benutzen,
die von der Seite des plattenförmigen Bauelementes her mit
einer Zangenbacke den Kopf des Befestigungselements und mit
der anderen Zangenbacke den Ring erfassen und zusammendrükken. Zumindest wird es leicht möglich sein, mit der einen
Hand den prismatischen Teil des Befestigungselementes einzuschlagen, während mit der anderen Hand am Ring gegengehalten
wird.

Die Erfindung wird im folgenden näher unter Bezugnahme auf
die Zeichnung erläutert, die ein vorteilhaftes Ausführungsbeispiel veranschaulicht. Darin zeigen:

Figur 1   einen Schnitt durch ein plattenförmiges Bauelement
          mit einem halbmontierten Befestigungselement und

Figur 2   einen entsprechenden Schnitt mit dem fertigmontierten Befestigungselement.

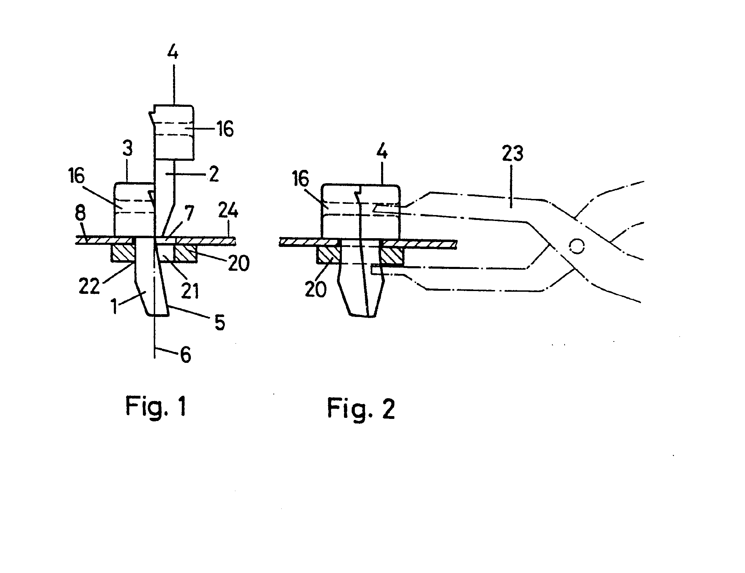

Das Befestigungselement besteht aus den beiden Schaftteilen
1 und 2 mit den zugehörigen Kopfteilen 3 und 4. Der keilförmige Schaftteil 1 ist so geformt, daß seine dem prismatischen Schaftteil 2 zugewendeten Innenfläche 5 gegenüber der
Bohrungslängsrichtung 6 zu dem prismatischen Schaftteil 2
hingeneigt ist. Man erkennt in Figur 1 zusätzlich zu den Teilen
1, 2 des Befestigungselementes den Befestigungsring 20, dessen Bohrung 21 einen im wesentlichen zylindrischen Durchmesser  hat, der dem Durchmesser des Schafts 1, 2 in seinem
Wurzelbereich, also am Übergang von den Köpfen 3,4 zu den
Schaftteilen 1, 2, im wesentlichen gleich ist. Da er im montierten Zustand auf einen Teil des Schafts einwirkt, der
einen gewissen Abstand von diesem Wurzelbereich hat, ist
sein Innendurchmesser kleiner oder höchstens gleich dem
Durchmesser des Schaftbereichs, mit dem er zusammenwirkt.
Seine Ausgangsseitige Kante 22 ist im wesentlichen scharf
ausgebildet. Er besteht aus      harten und zähen Kunststoff wie Nylon. Aus demselben Material mögen auch die
übrigen Teile des Befestigungselementes bestehen.

Die Montage des Befestigungselementes wird - im Vergleich
mit dem in Figur 1 gezeigten Zustand - dadurch bewirkt,
daß der prismatische Schaftteil 2 vollständig in die Bohrung 7, 21 eingestoßen wird. Dies kann beispielsweise mit
der bei 23 strichpunktiert angedeuteten Zange geschehen,
die einerseits den Kopfteil 4 und andererseits den Befestigungsring 20 erfaßt und zusammendrückt. Dies ist möglich,
weil das plattenförmige Bauelement 8 bei 24 begrenzt ist.
Um die notwendige Maulweite des Werkzeugs 23 gering zu halten und ein sicheres Zusammenwirken des Werkzeugs mit dem
Kopf 4 zu ermöglichen, kann der Kopf 4 mit einem Schlitz,
einer Vertiefung oder dgl. versehen sein, wobei die Spitze
eines Zangenschenkels der Form dieser Vertiefung entsprechend
geformt ist. Als eine solche Vertiefung eignet sich beispielsweise der Schlitz 16 im Kopf des Befestigungselements,
der beispielsweise zur späteren Anbringung einer Befestigungsschelle zum Halten eines Kabelbündels vorgesehen ist.
Der andere Schenkel des Werkzeugs 23 kann gabelförmig geformt
sein, um den Ring 20 auch beiderseits des Schafts 1, 2 fassen zu können.

GLAWE, DELFS, MOLL & PARTNER          PATENTANWÄLTE

0005479

DR.-ING. RICHARD GLAWE, MÜNCHEN
DIPL.-ING. KLAUS DELFS, HAMBURG
DIPL.-PHYS. DR. WALTER MOLL, MÜNCHEN
DIPL.-CHEM. DR. ULRICH MENGDEHL, HAMBURG

8 MÜNCHEN 26          2 HAMBURG 13
POSTFACH 37           POSTFACH 2570
LIEBHERRSTR. 20       ROTHENBAUM-
TEL. (089) 22 65 48   CHAUSSEE 58
TELEX 52 25 05        TEL. (040) 4 10 20 08
                      TELEX 21 29 21

HAMBURG

Paul Hellermann GmbH

Pinneberg

Bundesrepublik Deutschland

Befestigungselement

p 9157/79 EU
D/mq

## Patentansprüche

1. Befestigungselement, das von der Vorderseite eines plattenförmigen Bauelements her in einer Bohrung desselben mittels eines längsgeteilten Schafts verankerbar ist, der aus einem zuerst in die Bohrung einzuschiebenden, sich hinter der Bohrung erweiternden Teil und einem danach einzuschiebenden, prismatischen Teil zusammengesetzt ist, wobei jeder der beiden Teile an der Bildung des mit der Bohrung zusammenwirkenden Schaftumfanges beteiligt ist, und wobei der sich hinter der Bohrung erweiternde Schaftteil sich zu der Seite des prismatischen Schaftteils hin, diesen zumindest hinter der Bohrung von der Bohrungsachse weg nach außen biegend, erweitert, dadurch gekennzeichnet, daß zur Anbringung des Befestigungselements an einem sehr dünnen plattenförmigen Bauelement ein hinter der Bohrung (7) anzuordnender Ring (20) vorgesehen ist, dessen Innendurchmesser dem Wurzeldurchmesser des Schafts (1, 2) entspricht.

2. Befestigungselement nach Anspruch 1, dadurch gekennzeichnet, daß der Ring aus einem harten und zähen Werkstoff wie Nylon besteht.

3. Befestigungselement nach Anspruch 1 oder 2, dadurch gekennzeichnet, daß die Bohrung des Rings (20) zumindest auf der dem Bauelement abgewendeten Seite scharfkantig endet.

Fig. 1

Fig. 2